# EUROPÄISCHE PATENTANMELDUNG

(11) **EP 1 616 932 A1**
(43) Veröffentlichungstag der Anmeldung: **18.01.2006**
(21) Anmeldenummer: 05009641.1
(22) Anmeldetag: 03.05.2005
(51) Int. Cl.: C10J 3/36

(54) **Gleichstromvergaser**

(30) Priorität: 16.07.2004 DE 202004011213 U
(71) Anmelder: Kuntschar, Walter, 34466 Wolfhagen-Ippinghausen (DE)
(72) Erfinder: Kuntschar, Walter, 34466 Wolfhagen-Ippinghausen (DE)
(74) Vertreter: WALTHER, WALTHER & HINZ Patentanwälte - European Patent Attorneys

(57) **Zusammenfassung**

Gegenstand der Erfindung ist ein Gleichstromvergaser mit einem Füllschacht (10) zur Aufnahme von Holz oder einem anderen organischen Brennstoff, an den sich eine Brennkammer (12) anschließt, wobei sich während der Vergasung in der Brennkammer (12) ein Glutbett ausbildet, welches zumindest teilweise auf einem Rost (26) ruht, wobei Produktgas durch den Rost (26) hindurch abgeführt wird und wobei die Brennkammer (12) in der Höhe des Glutbettes mindestens eine Lufteintrittsöffnung (34) aufweist, durch die Umgebungsluft oder Sauerstoff in das Glutbett gelangt, wobei im heißen Glutbett mindestens ein Hohlraum ausgebildet ist, in den die aus der Lufteintrittsöffnung (34) kommende Umgebungsluft oder der Sauerstoff geleitet wird und in den aus dem Holz oder dem organischen Brennstoff austretendes Gas hineingelangt.

## Beschreibung

Die vorliegende Erfindung betrifft einen Gleichstromvergaser gemäß dem Oberbegriff des Anspruches 1.

Aus dem CH - 216 906 ist ein abwärts gerichteter Gleichstromvergaser bekannt, bei dem sich an einen Füllschacht eine Brennkammer anschließt, wobei die Brennkammer durch einen Brennkammerboden abgeschlossen ist. Im Brennkammerboden ist eine Öffnung vorgesehen, durch die das Produktgas abgesaugt werden kann. Auf der Öffnung steht ein kegelstumpfförmig ausgebildeter Rost. Dieser Rost ist von einem ebenfalls kegelstumpfförmig ausgebildeten Einsatz umgeben, der nach oben offen ausgebildet ist. Etwas oberhalb des Einsatzes sind in der Brennkammerwand Lufteinlässe vorgesehen, über die Umgebungsluft in die Brennkammer gelangt. Durch diese Anordnung wird die angesaugte Luft durch das Glutbett geleitet und vermischt sich dort teilweise mit dem vorhandenen Gas, bevor dieses Gemisch durch die Öffnung im Einsatz hindurch zum Rost gelangt und dort als Produktgas abgesaugt wird. Dabei findet in dem Gemisch eine chemische Reaktion statt, bei der Teile des im Gemisch vorhandenen Teers abgebaut werden. Es hat sich herausgestellt, dass dieses Produktgas weniger Teer aufweist, als andere Holzvergaser, leider aber noch zuviel, um als Brennstoff in einem Verbrennungsmotor wirtschaftlich genutzt werden zu können.

Davon ausgehend liegt der vorliegenden Erfindung die Aufgabe zu Grunde, einen Gleichstromvergaser der eingangs genannten Art zu schaffen, der ein teerarmes Produktgas mit einem ausreichenden Heizwert erzeugt, welches wirtschaftlich in einem Verbrennungsmotor genutzt werden kann.

Als technische Lösung dieser Aufgabe wird erfindungsgemäß ein Gleichstromvergaser gemäß den Merkmalen des Anspruches 1 vorgeschlagen. Vorteilhafte Weiterbildungen dieses Gleichstromvergasers sind den Unteransprüchen zu entnehmen.

Ein nach dieser technischen Lehre ausgebildeter Gleichstromvergaser hat den Vorteil, dass ein an dem heißen Glutbett ausgebildeter Hohlraum sowohl die Umgebungsluft bzw. den Sauerstoff, als auch das aus dem Holz oder dem organischen Brennstoff austretende Gas aufnimmt. Dabei vermischen sich die beiden Gase und aufgrund der hohen Temperatur im Hohlraum findet in dem Gemisch eine Reaktion statt, bei der die höheren Kohlenwasserstoffe zumindest teilweise mit Sauerstoff reagieren und sich zu CO₂ bzw. CO aufspalten. Folglich verringert sich die Anteil der höheren Kohlenwasserstoffe (Teer) im Produktgas. Die gleichzeitige Erhöhung der Anteile an CO₂ und CO hat keine nennenswerten Auswirkungen auf das Produktgas, da es sich hierbei nur um vergleichsweise geringe Mengen handelt.

Dabei hat sich herausgestellt, dass die oben beschriebene Reaktion am besten bei einer Temperatur zwischen 900°C und 1100°C abläuft, aber auch Temperaturen im Hohlraum zwischen 800°C und 1400°C führen zu positiven Ergebnissen.

Ein weiterer Vorteil der Ausbildung eines solchen Hohlraumes besteht darin, dass das aus dem Holz oder dem Brennstoff austretende Gas aufgrund des Umweges durch den Hohlraum eine längere Verweilzeit im Glutbett aufweist, so dass Zeit zur Ausführung der oben genannten Reaktion besteht, was im Ergebnis auch zu einem Abbau der Teeranteile im Produktgas führt.

In einer besonderen Ausführungsform ist der Hohlraum durch ein Abschirmblech gebildet, welches im Glutbett angeordnet ist. Dieses Abschirmblech kann beispielsweise auf den Boden der Brennkammer aufgesetzt werden und bildet somit eine sehr kostengünstige Variante zur Realisierung des Hohlraumes im Glutbett. Dabei hat es sich als kostengünstig erwiesen, die Stirnseiten des Abschirmbleches offen zu gestalten. Letzteres hat außerdem den Vorteil, dass hierdurch eine gute Zirkulation der Gase erreicht wird.

Damit das aus dem Holz oder dem Brennstoff austretende Gas auch zuverlässig in den durch das Abschirmblech gebildeten Hohlraum eintreten kann, wird das Abschirmblech vorzugsweise beabstandet von der Brennkammerwand angeordnet. Um eine gute Zirkulation der Gase zu erreichen, ist es auch sinnvoll, im Abschirmblech eine oder mehrere Aussparungen vorzusehen, durch die das Gas hindurchtreten kann.

Die offene Stirnseite und die Beabstandung des Abschirmbleches von der Brennkammerwand, bzw. die Einrichtung von Aussparungen im Abschirmblech haben weiterhin den Vorteil, dass die in den Hohlraum eintretende Umgebungsluft (bzw. Sauerstoff) einen Sog erzeugt und dabei im Umfeld des Abschirmbleches befindliche Gase in den Hohlraum hineinsaugt, so dass die oben beschriebene Reaktion zuverlässig ablaufen kann. Ein weiterer Vorteil der offenen Stirnseite besteht darin, dass auf der dem Lufteintritt gegenüberliegenden Seite das hier entstehende Gemisch aufgrund des Unterdrucks in der Brennkammer aus dem Hohlraum abgesaugt wird, was auch zur Folge hat, dass weiteres Gas in den Hohlraum eintreten kann. Durch diese Anordnung ist eine kontinuierliche Strömung von Umgebungsluft und aus dem Holz austretendem Gas gewährleistet, so dass ein kontinuierlicher Abbau der vorhandenen Teere erreicht wird.

In einer anderen, bevorzugten Ausführungsform ist unterhalb der Lufteintrittsöffnung eine Plattform ausgebildet, auf der ein Teil des Glutbettes ruht, während in der Mitte der Plattform eine Öffnung vorgesehen ist, in der der Rost angeordnet ist. Dies hat den Vorteil, dass die eintretende Umgebungsluft auf dem Weg zum Rost auf jeden Fall eine gewisse Distanz zurücklegen muss, wobei dieser Weg zumindest teilweise durch den im Glutbett angeordneten Hohlraum führt. Folglich wird durch die Plattform erreicht, dass die Luft von der Lufteintrittsöffnung bis zum Rost einen gewissen Weg zurücklegen muss, auf dem die Vermischung mit aus dem Holzaustritt in Gas erfolgt und auf dem die oben beschriebene Reaktion ablaufen kann.

In einer bevorzugten Weiterbildung ist der Rost zylindrisch, kegelförmig oder kegelstumpfförmig ausgebildet und zumindest größtenteils unterhalb der Plattform angeordnet. Hierdurch wird das Gemisch bzw. das aus dem Holz austretende Gas vertikal nach unten gezogen und verbleibt nochmals eine gewisse Zeit im heißen Glutbett, so dass ausreichend Zeit zur Durchführung der oben beschriebenen Reaktion besteht. Letzteres bewirkt einen weiteren Abbau der höheren Kohlwasserstoffe, da das Glutbett hier auch zwischen 800°C und 1400°C aufweist. Dabei hat es sich als vorteilhaft erwiesen, die Brennkammer um den Rost herum überall gleich groß auszubilden, damit in diesem Bereich ein einheitliches Glutbett mit einer einheitlichen Temperatur vorherrscht.

Noch ein weiterer Vorteil besteht darin, dass der unter der Plattform angeordnete Rost mit dem dazugehörigen Teil des Glutbettes für eine ausreichende Erwärmung der Hohlräume sorgt, so dass ein nahezu optimaler Teerabbau erreicht wird.

Weitere Vorteile des erfindungsgemäßen Gleichstromvergasers ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine schematische Schnittdarstellung eines erfindungsgemäßen Vergasers;
- Fig. 2: eine geschnitten dargestellte Draufsicht auf den Vergaser gemäß Fig. 1, geschnitten entlang Linie II -II in Fig. 1;
- Fig. 3: eine Ausschnittsvergrößerung gemäß Linie III in Fig. 2.

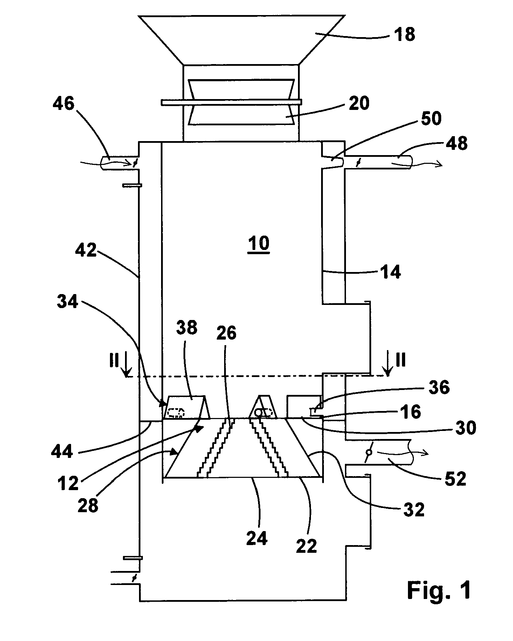

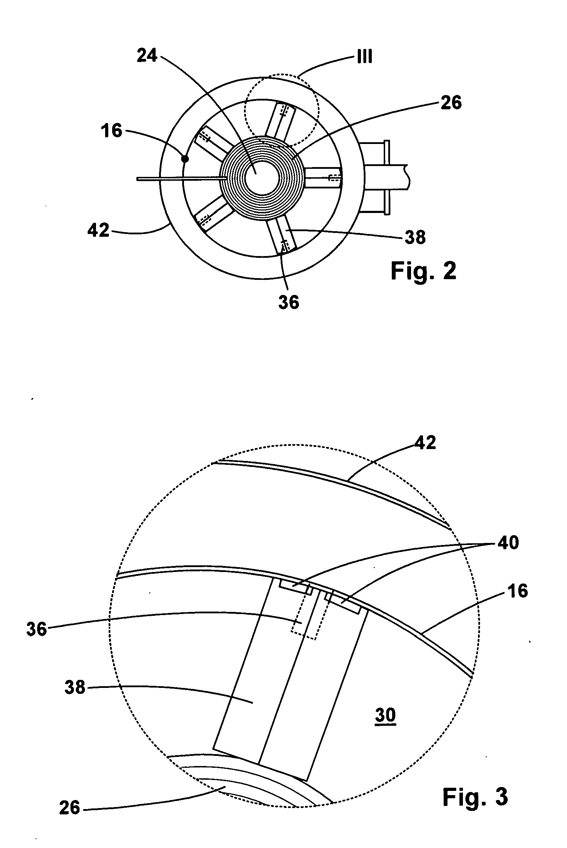

In den Figuren 1 bis 3 ist eine Ausführungsform eines erfindungsgemäßen Gleichstromvergasers dargestellt. Dieser Gleichstromvergaser umfasst einen Füllschacht 10 zur Aufnahme des Holzes und eine sich daran anschließende Brennkammer 12, in dem das Holz verglüht, wobei sich in der Brennkammer 12 ein hier nicht näher dargestelltes Glutbett ausbildet. Der Füllschacht 10 ist von einer Füllschachtwand 14 und die Brennkammer 12 von einer Brennkammerwand 16 begrenzt, die beide den gleichen Durchmesser aufweisen.

Oberhalb des Füllschachtes 10 ist ein Vorratsbehälter 18 vorgesehen, an dem ein Füllrad 20 angeschlossen ist, mit dem dann das Holz aus dem Vorratsbehälter 18 kontrolliert in den Füllschacht 10 eingelassen werden kann.

Es versteht sich, dass außer Holz auch andere organische Brennstoffe oder ein Gemisch von Holz mit einem anderen organischen Brennstoff in diesem Gleichstromvergaser vergast werden können.

Die Brennkammer 12 wird stirnseitig von einem Brennkammerboden 22 begrenzt, indem eine Öffnung 24 mittig eingelassen ist. Über der Öffnung ist ein kegelstumpfartiger Rost 26 angeordnet, so dass das aus der Brennkammer 12 austretende Produktgas zwingend durch den Rost 26 und die Öffnung 24 hindurchtreten muss.

Im Bereich der Brennkammer 16 ist eine Glutbettbegrenzung 28 eingearbeitet, die sich aus einer horizontal angeordneten Plattform 30 und einer kegelstumpfförmig ausgebildeten Glutbettwand 32 zusammensetzt. Dabei ist die Glutbettwand 32 um den kegelstumpfförmigen Rost 26 herum derart angeordnet, dass der Abstand zwischen dem Rost 26 und der Glutbettwand 32 stets der gleiche ist, so dass sich hier ein gleichmäßiges Glutbett ausbilden kann. Die Plattform 30 ist unterhalb von in der Brennkammerwand 16 vorgesehenen Lufteinlassöffnungen 34 ausgebildet, so dass sich ein Teil des Glutbettes auf der Plattform 30 ablagern kann.

Über den Umfang der Brennkammerwand 16 verteilt, sind fünf Lufteinlassöffnungen 34 vorgesehen, wobei an jeder dieser Lufteinlassöffnungen 34 ein kurzes, zylindrisches Rohr 36 angeschlossen ist. Dieses Rohr mündet in je einen durch ein Abschirmblech 38 erzeugten Hohlraum, wobei die Stirnseiten des Abschirmbleches 38 offen ausgebildet sind. Dabei weist das Abschirmblech 38 an seiner der Brennkammerwand 16 zugewandten Seite zwei Aussparungen 40 auf, durch die aus dem Holz austretendes Gas in den Hohlraum unter dem Abschirmblech 38 eintreten kann.

Um den Füllschacht und um die Brennkammer herum weist der Gleichstromvergaser eine Außenwand 42 auf, die durch eine Trennwand 44 in zwei Bereiche unterteilt ist. Im oberen Bereich der Außenwand 42 wird Umgebungsluft oder Sauerstoff über einen Stutzen 46 in den Bereich zwischen der Außenwand 42 und der Füllschachtwand 14 bzw. der Brennkammerwand 16 eingeblasen. Dabei gelangt ein Teil dieser Umgebungsluft über die Lufteinlassöffnung 34 in die Brennkammer 12. Ein anderer Teil dieser Luft wird über den Stutzen 48 wieder aus dem Gleichstromvergaser herausgeblasen. Der dabei entstehende Sog saugt über die Öffnung 50 im oberen Bereich der Füllschachtwand 14 dort befindliche, vergleichsweise feuchte Luft heraus. Hierdurch wird zumindest eine teilweise Trocknung des Holzes erreicht. Im unteren Bereich der Außenwand 42 ist ein Behälter ausgebildet, in dem sich die anfallende Asche sammelt. Gleichzeitig wird hierüber über den Stutzen 52 das Produktgas abgesaugt.

Die Vergasung läuft wie folgt ab:

In der Brennkammer 12 bildet sich ein Glutbett mit Temperaturen von über 900°C aus. Dieses Glutbett erwärmt das über dem Glutbett liegende Holz und bewirkt ein zumindest teilweises Ausgasen. Durch das Absaugen des Produktgases über dem Stutzen 52 entsteht in der Brennkammer 12 und insbesondere im Glutbett ein Unterdruck, so dass die in der Brennkammer bzw. im Füllschacht vorhandenen Gase abgesaugt werden. Gleichzeitig wird über die Lufteinlassöffnungen Umgebungsluft in die Brennkammer eingelassen, wobei diese Umgebungsluft durch die Rohre 36 in einen Hohlraum unter dem Abschirmblech 38 gelangen. Der dabei entstehende Sog saugt über die Aussparungen 40 im Glutbett vorhandenes Gas in diesen Hohlraum. Dabei vermischt sich das Gas mit der Umgebungsluft und der vorhandene Sauerstoff bewirkt, dass sich die im Gas befindlichen höheren Kohlenwasserstoffe zu CO₂ oder CO aufspalten. Es ist vorteilhaft, im Hohlraum eine Temperatur von 900°C bis 1100°C vorzuhalten, da bei diesen Temperaturen eine bestmögliche Aufspaltung der höheren Kohlenwasserstoffe erfolgt. Dieses Gasgemisch wird anschließend durch das Glutbett entlang des Rostes 26 geleitet, so dass eine weitere Aufspaltung der höheren Kohlenwasserstoffe erfolgt. Das hierdurch erzielte Produktgas weist einen so geringen Teeranteil auf, dass dieses Produktgas dann problemlos in einer Verbrennungskraftmaschine zur Stromerzeugung genutzt werden kann.

In einer anderen, hier nicht dargestellten Ausführungsform ist das Abschirmblech 38 beabstandet von der Brennkammerwand 16 angeordnet, damit zwischen Abschirmblech 38 und Brennkammerwand 16 aus dem Holz ausgetretenes Gas in den Hohlraum gelangen kann.

### Bezugszeichenliste:

- 10: Füllschacht
- 12: Brennkammer
- 14: Füllschachtwand
- 16: Brennkammerwand
- 18: Vorratsbehälter
- 20: Füllrad
- 22: Brennkammerboden
- 24: Öffnung
- 26: Rost
- 28: Glutbettbegrenzung
- 30: Plattform
- 32: Glutbettwand
- 34: Lufteinlassöffnung
- 36: Rohr
- 38: Abschirmblech
- 40: Aussparung
- 42: Außenwand
- 44: Trennwand
- 46: Stutzen
- 48: Stutzen
- 50: Öffnung
- 52: Stutzen

## Patentansprüche

1. Gleichstromvergaser, mit einem Füllschacht zur Aufnahme von Holz oder einem anderen organischen Brennstoff, an den sich eine Brennkammer anschließt, wobei sich während der Vergasung in der Brennkammer ein Glutbett ausbildet, welches zumindest teilweise auf einem Rost ruht, wobei Produktgas durch den Rost hindurch abgeführt wird, und wobei die Brennkammer in der Höhe des Glutbettes mindestens eine Lufteintrittsöffnung aufweist, durch die Umgebungsluft oder Sauerstoff in das Glutbett gelangt,
**dadurch gekennzeichnet,**
**dass** im heißen Glutbett mindestens ein Hohlraum ausgebildet ist, in den die aus der Lufteintrittsöffnung (34) kommende Umgebungsluft oder der Sauerstoff geleitet wird und in den aus dem Holz oder dem organischen Brennstoff austretendes Gas hineingelangt.

2. Vergaser nach Anspruch 1,
**dadurch gekennzeichnet,**
**dass** der Hohlraum in einem Bereich des Glutbettes angeordnet ist, in dem eine Temperatur zwischen 800°C und 1400°C, vorzugsweise zwischen 900°C und 1100°C vorherrscht.

3. Vergaser nach wenigstens einem der vorangehenden Ansprüche,
**dadurch gekennzeichnet,**
**dass** der Hohlraum durch ein im Glutbett angeordnetes Abschirmblech (38) gebildet ist.

4. Vergaser nach Anspruch 3,
**dadurch gekennzeichnet,**
**dass** das Abschirmblech (38) aus einem gebogenen Blech gebildet ist, dessen Stirnseiten offen ausgebildet sind.

5. Vergaser nach wenigstens einem der Ansprüche 3 oder 4,
**dadurch gekennzeichnet,**
**dass** das Abschirmblech (38) beabstandet von einer Brennkammerwand (16) angeordnet ist.

6. Vergaser nach wenigstens einem der Ansprüche 3 oder 4,
**dadurch gekennzeichnet,**
**dass** das Abschirmblech (38) mindestens eine Aussparung (40) aufweist, durch die das Gas hindurch treten kann.

7. Vergaser nach wenigstens einem der vorangehenden Ansprüche,
**dadurch gekennzeichnet,**
**dass** unterhalb der Lufteintrittsöffnung (34) eine Plattform (30) ausgebildet ist, auf der ein Teil des Glutbettes ruht, während in der Mitte der Plattform (30) ein Öffnung vorgesehen ist, in der der Rost (26) angeordnet ist.

8. Vergaser nach Anspruch 7,
**dadurch gekennzeichnet,**
**dass** der Rost (26) zylindrisch, kegelförmig oder kegelstumpfförmig ausgebildet ist und zumindest größtenteils unterhalb der Plattform (30) angeordnet ist.

9. Vergaser nach wenigstens einem der Ansprüche 7 oder 8,
**dadurch gekennzeichnet,**
**dass** um den Rost (26) herum eine Glutbettwand (32) angeordnet ist, die an jeder Stelle den gleichen Abstand zum Rost (26) aufweist.
